# EUROPEAN PATENT APPLICATION

(11) **EP 4 345 611 A1**
(43) Date of publication of application: **03.04.2024**
(21) Application number: 21962166.1
(22) Date of filing: 02.12.2021
(51) Int. Cl.: G06F 9/4401, G06F 12/02

(54) **BOOTLOADER LOADING METHOD, APPARATUS AND SYSTEM, ELECTRONIC DEVICE AND MEDIUM**

(30) Priority: 01.11.2021 CN 202111283298
(71) Applicant: Rolling Wireless S.À R.L., 2540 Luxembourg (LU)
(72) Inventor: TAO, Qinghuan, Shenzhen, Guangdong 518055 (CN)
(74) Representative: J A Kemp LLP
(86) International application number: PCT/CN2021/135030
(87) International publication number: WO 2023/070823

(57) **Abstract**

Provided are a Bootloader loading method, apparatus and system, an electronic device, and a computer-readable storage medium. The method includes: loading a first code segment from a flash memory into an IMEM when it is detected that a Bootloader needs to be loaded; running the first code segment in order to load a second code segment from the flash memory into an external memory while the first code segment is running; and running the second code segment.

## Description

This application claims priority to Chinese patent application No. 202111283298.8, filed on November 1, 2021, and entitled "Bootloader Loading Method, Apparatus and System, Electronic Device and Medium," the entire contents of which are incorporated herein by reference.

### FIELD

The present application relates to the technical field of computers, in particular to a Bootloader loading method, a Bootloader loading apparatus, a Bootloader loading system, an electronic device, and a computer-readable storage medium.

### BACKGROUND

As an component in an automotive electrical system, a cellular wireless communication module and a Bootloader of it are very important. In general, the Bootloader runs on an IMEM (i.e., Internal Memory, processor on-chip memory) inside a CPU (Central Processing Unit). Currently, a compiler deploys all code running spaces within the address range of the IMEM when the Bootloader is being compiled. After the CPU is powered on and started, a complete Bootloader code is read from a flash memory, and the complete Bootloader code is loaded into the IMEM for running. The space of the IMEM inside the CPU generally is very limited, and manufacturers cannot expand the space size of the IMEM by modifying hardware. As a result, the manufacturers usually cannot implement powerful and necessary functions in the Bootloader to increase the reliability of the cellular wireless communication module, otherwise the Bootloader will be out of the space range of the IMEM and eventually cannot be loaded and run normally.

### SUMMARY

In view of this, an object of the present application is to provide a Bootloader loading method, a Bootloader loading apparatus, a Bootloader loading system, an electronic device, and a computer-readable storage medium.

The present application provides a Bootloader loading method, including:
loading a first code segment from a flash memory into an IMEM when it is detected that the Bootloader needs to be loaded;
running the first code segment in order to load a second code segment from the flash memory into an external memory while the first code segment is running; and
running the second code segment.

Optionally, loading the first code segment from the flash memory into the IMEM includes:
recognizing the code segment identification of each code segment of the Bootloader in the flash memory; and
loading the first code segment with with first code segment identification into the IMEM.

Optionally, the Bootloader loading method further includes:
designating a hardware driver code and a load boot code in the Bootloader as the first code segment; and
designating a function code in the Bootloader as the second code segment.

Optionally, designating the hardware driver code and the load boot code in the Bootloader as the first code segment includes:
designating the starting address of the running space of the hardware driver code and the load boot code as the first address; and
accordingly, wherein designating the function code in the Bootloader as the second code segment comprises:
   Designating the starting address of the running space of the function code as the second address.

Optionally, loading the first code segment from the flash memory into the IMEM includes:
recognizing the starting address of the the running space of each code segment of the Bootloader in the flash memory; and
loading the first code segment into the IMEM when the starting address of the running space is the first address.

Optionally, the Bootloader loading method further includes:
obtaining an editing instruction; and
editing the function code according to the editing instruction.

The present application further provides a Bootloader loading apparatus, including:
a loading module configured to load a first code segment from a flash memory into an IMEM when it is detected that the Bootloader needs to be loaded;
a first running module configured to run the first code segment in order to load a second code segment from the flash memory into an external memory while the first code segment is running; and
a second running module configured to run the second code segment.

The present application further provides a Bootloader loading system, including a processor, a flash memory and an external memory, wherein:
the flash memory is configured to store a Bootloader; and
the processor is configured to load a first code segment from a flash memory into an IMEM when it is detected that the Bootloader needs to be loaded; run the first code segment in order to load a second code segment from the flash memory into an external memory while the first code segment is running; and run the second code segment.

The present application further provides an electronic device, including a memory and a processor, wherein:
the memory is configured to store a computer program; and
the processor is configured to execute the computer program to implement the Bootloader loading method described above.

The present application further provides a computer-readable storage medium configured to store a computer program, wherein the computer program, when executed by a processor, implements the Bootloader loading method described above.

The details of one or more embodiments of the present application are set forth in the accompanying drawings and the description below. Other features, objects, and advantages of the present application will be apparent from the description and drawings, and the claims.

### BRIEF DESCRIPTION OF THE DRAWINGS

In order to illustrate the technical solutions in the embodiments of the present application or the related art more clearly, the accompanying drawings required to be used in the description of the embodiments or the related art will be briefly introduced below. Obviously, the accompanying drawings in the following description are merely the embodiments of the present application. For those of ordinary skill in the art, other drawings can also be obtained according to the provided drawings without inventive steps.
FIG 1 is a flowchart of a Bootloader loading method according to an embodiment of the present application;
FIG 2 is a schematic structural diagram of a Bootloader loading system according to an embodiment of the present application;
FIG 3 is a schematic structural diagram of a Bootloader loading apparatus according to an embodiment of the present application; and
FIG 4 is a schematic structural diagram of an electronic device according to an embodiment of the present application.

### DETAILED DESCRIPTION

In order to make the objectives, technical solutions and advantages of the embodiments of the present application more clear, the technical solutions in the embodiments of the present application will be clearly and completely described below in conjunction with the accompanying drawings in the embodiments of the present application, and obviously, the described embodiments are only part of the embodiments of the present application, rather than all of the embodiments. Based on the embodiments in the present application, all other embodiments obtained by those of ordinary skill in the art without making inventive steps fall within the scope of protection of the present application.

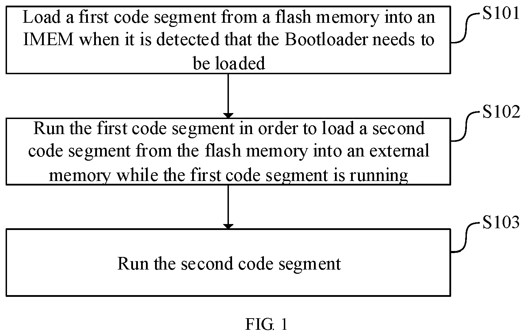

Please refer to FIG 1, which is a flowchart of a Bootloader loading method according to an embodiment of the present application. It should be understood that although the steps in the flowchart of FIG 1 are shown in sequence as indicated by arrows, the steps are not necessarily performed in sequence in an order indicated by the arrows. The steps are performed without a strict sequence limitation and may be performed in other sequences unless explicitly stated herein. Moreover, at least a part of the steps in the figure may include a plurality of sub-steps or a plurality of stages, these sub-steps or stages are not necessarily executed to be completed at the same moment, but may be executed at different moments, and the execution sequence is not necessarily performed in sequence, but the sub-steps or stages can be performed in turn or alternately with other steps or at least a part of sub-steps or stages of other steps. The method includes:
S101: A first code segment from a flash memory is loaded into an IMEM when it is detected that a Bootloader needs to be loaded.

The Bootloader is the first piece of code executed after an embedded system is powered up, after it finishes initialization of a CPU and related hardware, it loads an operating system image or a solidified embedded application into a memory, and then jumps to the space where an operating system is located to start the operating system to run. The Bootloader can initialize a hardware device and create a memory space map to bring the software and hardware environment of the system to an appropriate state, so as to prepare a correct environment for final calling of a kernel of the operating system.

When the system is powered up and started, a signal or identification that the Bootloader needs to be loaded will be generated, and after the signal or identification is detected, it is determined that the Bootloader needs to be loaded. Therefore, the first code segment is read from the flash memory and loaded into the IMEM. A specific content of the first code segment is not limited, and the first code segment has a special function, that is, the content of a second code segment can be loaded into an external memory after the first code segment is run. The external memory refers to a memory that is not an on-chip memory that is communicatively connected to a processor, and may specifically be a DDR (Double Data Rate Synchronous Dynamic Random Access Memory).

S102: The first code segment is run in order to load a second code segment from the flash memory into an external memory while the first code segment is running.

The first code segment refers to a code segment configured to load the second code segment from the flash memory into the external memory. After the first code segment is run, a running process of the first code segment loads the second code segment into the external memory. Since the external memory has a relatively large storage space with almost no limitation on the data volume size of the second code segment, the second code segment can be configured to implement various functions and implement powerful and necessary functions to increase the reliability of a cellular wireless communication module without being limited by the size of the IMEM.

S103: The second code segment is run.

After the second code segment is loaded, the second code segment is run. Running of the second code segment implements the corresponding functions.

It can be understood that both the first code segment and the second code segment are stored in the flash memory, so when the code segments are loaded, it is necessary to determine which is the first code segment. In particular, the process of loading the first code segment from the flash memory into the IMEM may include:
Step 11: The code segment identification of each code segment of the Bootloader from the flash memory is recognized.
Step 12: The first code segment with the first code segment identification is loaded into the IMEM.

In this embodiment, in the flash memory, each code segment of the Bootloader that constitutes the Bootloader has a corresponding code segment identification. When the first code segment is loaded, each code segment identification may be identified, and the code segment of the Bootloader with the first code segment identification may be identified as the first code segment, and then loaded into the IMEM. This embodiment does not limit a specific form of each code segment identification, which is obtained by marking the Bootloader. Therefore, the following steps may further be included in this embodiment:
Step 21: A hardware driver code and a load boot code in the Bootloader is designated as the first code segment.
Step 22: A function code in the Bootloader is designated as the second code segment.

Since the first code segment needs to perform the works of initializing the hardware device, creating a memory space map, etc., and also needs to load the second code segment into the external memory, the hardware driver code and the load boot code can be designated as the first code segment at the time of marking. Wherein the load boot code refers to a code configured to load the second code segment into the external memory after being run. Furthermore, in order to implement various functions to guarantee the reliability of the cellular wireless communication module, a plurality of function codes may be provided, which occupy a large space, so that the function codes can be designated as the second code segment to avoid occupying the space of the IMEM.

This embodiment does not limit a specific marking manner, and in one embodiment, the process of marking the hardware driver code and the load boot code in the Bootloader as the first code segment may include:
Step 31: The starting address of therunning space of the hardware driver code and the load boot code is designated as a first address.

Accordingly, tdesignating the function code in the Bootloader as the second code segment may comprise:
Step 32: The starting address of the running space of the function code is designated as the second address.

Since its corresponding running space needs to be determined when each code is loaded, the first code segment can be distinguished from the second code segment by arranging the first code segment and the second code segment to correspond to different storage devices. In this embodiment, the starting address of the running space of the hardware driver code and the load boot code is set at the first address in the IMEM, and furthermore, the starting address of the running space of the function code is designated as the second address of the external memory.

Accordingly, upon loading, the following steps may be performed:
Step 33: The starting address of the running space of each code segment of the Bootloader from the flash memory is recognized.

Step 34: The first code segment into the IMEM when the starting address of the running space is the first address is loaded.

That is, upon loading, the starting address of the running space of each code segment of the Bootloader is identified, and a code segment of which the starting address of the running space is the first address is determined as the first code segment, and is then loaded into the IMEM.

It can be understood that a user can set the contents of the function code according to needs, so it is possible to obtain an editing instruction, and according to the editing instruction, the function code is edited, so that the user can set the function code according to needs.

By applying the Bootloader loading method provided by the embodiment of the present application, the Bootloader is divided into two parts, which are respectively the first code segment and the second code segment. When the Bootloader is loaded, the first code segment from the flash memory may be loaded into the IMEM. The first code segment may not be configured to implement a function, and the second code segment can be loaded into the external memory after the first code segment is run. The external memory has a relatively large storage space with almost no limitation on the data volume size of the second code segment. The second code segment is configured to implement various functions. Because its size is not limited in any way, the second code segment can be configured to implement powerful and necessary functions to increase the reliability of the cellular wireless communication module without being limited by the size of the IMEM, and the problem that the Bootloader cannot be normally loaded and run does not occur.

A Bootloader loading system provided by an embodiment of the present application will be described below, and the Bootloader loading system described below and the Bootloader loading method described above can correspond and refer to each other.

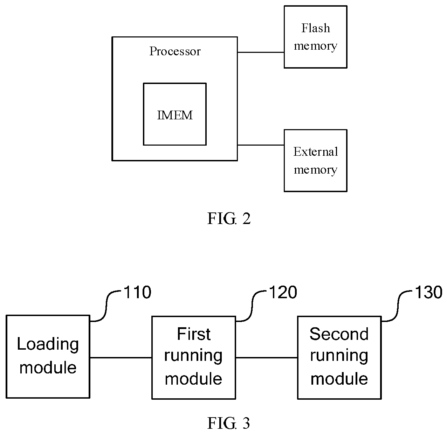

Please refer to FIG 2, which is a schematic structural diagram of a Bootloader loading system according to an embodiment of the present application, including a processor, a flash memory and an external memory, wherein:
the flash memory is configured to store a Bootloader; and
the processor is configured to load a first code segment from a flash memory into an IMEM when it is detected that the Bootloader needs to be loaded; run the first code segment in order to load a second code segment from the flash memory into an external memory while the first code segment is running; and run the second code segment.

A Bootloader loading apparatus provided by the embodiment of the present application will be described below, and the Bootloader loading apparatus described below and the Bootloader loading method described above can correspond and refer to each other.

Please refer to FIG 3, which is a schematic structural diagram of a Bootloader loading apparatus according to an embodiment of the present application, including:
a loading module 110 configured to load a first code segment from a flash memory into an IMEM when it is detected that the Bootloader needs to be loaded;
a first running module 120 configured to run the first code segment in order to load a second code segment from the flash memory into an external memory while the first code segment is running; and
a second running module 130 configured to run the second code segment.

Optionally, the loading module 110 includes:
a recognizing unit configured to recognize a code segment identification corresponding to each code segment of the Bootloader from the flash memory; and
a loading unit configured to load the first code segment with the first code segment identification into the IMEM.

Optionally, the Bootloader loading apparatus further includes:
a first designating module configured to designate a hardware driver code and a load boot code in the Bootloader as the first code segment; and
a second designating module configured to designate a function code in the Bootloader as the second code segment.

Optionally, the first marking module includes:
a first address setting unit configured to designate the starting address of the running space of the hardware driver code and the load boot code as the first address; and
accordingly, a second designating module includes:
   a second address setting unit configured to designate the starting address of the running space of the function code as the second address .

Optionally, the loading module 110 includes:
an address recognizing unit configured to recognize the starting address of the running space of each code segment of the Bootloader in the flash memory; and
a loading unit configured to load the first code segment into the IMEM when the starting address of the running space is the first address .

Optionally, the Bootloader loading apparatus further includes:
a function editing module configured to obtain an editing instruction, and edit the function code according to the editing instruction.

The modules, units and sub-units in the apparatus described above may be implemented in whole or in part by software, hardware and a combination thereof. The modules, units and sub-units described above may be embedded in the form of hardware or separate from a processor in an electronic device, or may be stored in the form of software in a memory in the electronic device so that the processor calls to perform the operations corresponding to the modules described above.

As used in this application, the terms "component", "module", "system", and the like are intended to denote computer-related entities, which may be hardware, a combination of hardware and software, software, or software in execution. For example, the component can be, but is not limited to, a process running on a processor, a processor, an object, an executable code, an executing thread, a program, and/or a computer. By way of illustration, both an application running on a server and the server can be a component. One or more components may reside within a process and or an executing thread, and the components may be located within one computer and/or distributed between two or more computers.

An electronic device provided by an embodiment of the present application will be described below, and the electronic device described below and the Bootloader loading method described above can correspond and refer to each other.

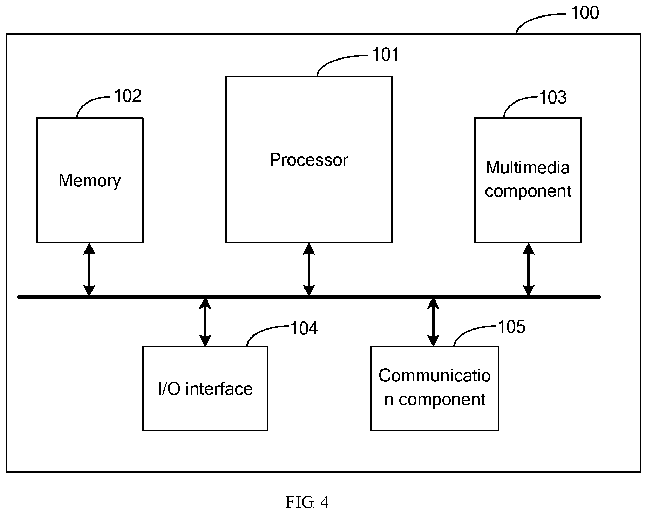

Please refer to FIG 4, which is a schematic structural diagram of an electronic device according to an embodiment of the present application. An electronic device 100 may include a processor 101 and a memory 102, and may further include one or more of a multimedia component 103, an information input/output (I/O) interface 104, and a communication component 105.

It should be noted that the electronic device may specifically be a module capable of implementing a communication function or a terminal device including the module, the terminal device may specifically be a mobile terminal and/or a smart device, etc., the mobile terminal may specifically be at least one of a mobile phone, a tablet computer, a notebook computer and the like, the smart device may specifically be at least one of a smart watch, a smart refrigerator, a smart speaker, a smart washing machine, a smart television, a smart car, and the like, and the module may specifically be any one of a 2G communication module, a 3G communication module, a 4G communication module, a 5G communication module, an NB-IOT communication module, and the like.

The processor 101 is configured to control the overall operation of the electronic device 100 to complete all or part of the steps in the Bootloader loading method described above; and the memory 102 is configured to store various types of data to support operation of the electronic device 100, and these data may include, for example, instructions for any applications or methods operating on the electronic device 100, as well as application-related data. The memory 102 may be implemented by any type of volatile or non-volatile storage device, or a combination thereof, for example, one or more of a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The multimedia component 103 may include a screen and an audio component. The screen may be, for example, a touch screen, and the audio component is configured to output and/or input audio signals. For example, the audio component may include a microphone for receiving external audio signals. The received audio signals may further be stored in the memory 102 or transmitted via the communication component 105. The audio component further includes at least one speaker for outputting audio signals. The I/O interface 104 provides an interface between the processor 101 and other interface modules, which may be a keyboard, a mouse, a button, and the like. These buttons may be virtual buttons or physical buttons. The communication component 105 is used for wired or wireless communication between the electronic device 100 and other devices.

The electronic device 100 may be implemented with one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements for performing the Bootloader loading method provided by the above embodiment.

A computer-readable storage medium provided by an embodiment of the present application will be described below, and the computer-readable storage medium described below and the Bootloader loading method described above can correspond and refer to each other.

The present application further provides a computer-readable storage medium, having stored thereon a computer program which, when executed by a processor, implements the steps of the Bootloader loading method described above.

The computer-readable storage medium may include various media in which program codes can be stored, such as a USB flash disk, a mobile hard disk, a Read-Only Memory (ROM), a Random Access Memory (RAM), a magnetic disk, or an optical disk.

The embodiments in the description are described in a progressive manner, wherein each embodiment focuses on the differences from other embodiments, and the same or similar parts of the embodiments may refer to each other. For the apparatus disclosed in the embodiment, since the apparatus corresponds to the method disclosed in the embodiment, the description is relatively simple, and the relevant parts refer to the description of the method.

Those skilled in the art may further realize that the illustrative units and algorithm steps described in connection with the embodiments disclosed herein can be implemented in electronic hardware, computer software, or a combination of the electronic hardware and the computer software. To clearly illustrate this interchangeability of hardware and software, the illustrative components and steps have been described generally in the above description in terms of their functionality. Whether these functions are executed in hardware or software depends upon the particular application and design constraints of the technical solution. Those skilled in the art may use different methods to implement the described functions for each particular application, but such implementations should not be considered to be beyond the scope of the present application.

The steps of the method or algorithm described in connection with the embodiments disclosed herein may be implemented directly by hardware, a software module executed by a processor, or a combination of the hardware and the software module. The software module may be placed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

Finally, it should also be noted that relational terms such as first and second and the like are only used herein to distinguish one entity or operation from another entity or operation without necessarily requiring or implying any actual such relationship or order between such entities or operations. Furthermore, the term "include", "comprise" or any other variation thereof is intended to cover a non-exclusive inclusion, such that a process, method, article, or apparatus including a list of elements includes not only those elements but also other elements that are not expressly listed or also includes elements inherent to such process, method, article, or apparatus.

The principles and embodiments of the present application have been described herein with reference to specific examples, and the description of the above embodiments are only intended to assist in understanding the method of the present application and its core concept. Meanwhile, for those of ordinary skill in the art, changes may be made to the specific embodiments and the application range based on the concept of the present application. In conclusion, the description should not be construed as limiting the present application.

## Claims

1. A Bootloader loading method, comprising:
loading a first code segment from a flash memory into an IMEM when it is detected that the Bootloader needs to be loaded;
running the first code segment in order to load a second code segment from the flash memory into an external memory while the first code segment is running; and
running the second code segment.

2. The Bootloader loading method according to claim 1, wherein loading the first code segment from the flash memory into the IMEM comprises:
recognizing the code segment identification of each code segment of the Bootloader in the flash memory; and
loading the first code segment with the first code segment identification into the IMEM.

3. The Bootloader loading method according to claim 1, further comprising:
designating a hardware driver code and a load boot code in the Bootloader as the first code segment; and
designating a function code in the Bootloader as the second code segment.

4. The Bootloader loading method according to claim 3, wherein designating the hardware driver code and the load boot code in the Bootloader as the first code segment comprises:
designating the starting address of the running space of the hardware driver code and the load boot code as the first address; and
accordingly, wherein designating the function code in the Bootloader as the second code segment comprises:
designating the starting address of the running space of the function code as the second address.

5. The Bootloader loading method according to claim 4, wherein loading the first code segment from the flash memory into the IMEM comprises:
recognizing the starting address of the running space of each code segment of the Bootloader in the flash memory; and
loading the first code segment into the IMEM when the starting address of the running space is the first address.

6. The Bootloader loading method according to claim 3, further comprising:
obtaining an editing instruction; and
editing the function code according to the editing instruction.

7. A Bootloader loading apparatus, comprising:
a loading module configured to load a first code segment from a flash memory into an IMEM when it is detected that the Bootloader needs to be loaded;
a first running module configured to run the first code segment in order to load a second code segment from the flash memory into an external memory while the first code segment is running; and
a second running module configured to run the second code segment.

8. A Bootloader loading system, comprising a processor, a flash memory, and an external memory, wherein:
the flash memory is configured to store a Bootloader; and
the processor is configured to load a first code segment from a flash memory into an IMEM when it is detected that the Bootloader needs to be loaded; run the first code segment in order to load a second code segment from the flash memory into an external memory while the first code segment is running; and run the second code segment.

9. An electronic device, comprising a memory and a processor,
wherein the memory is configured to store a computer program; and
the processor is configured to execute the computer program to implement the Bootloader loading method according to any one of claims 1 to 6.

10. A computer-readable storage medium, configured to store a computer program, wherein the computer program, when executed by a processor, implements the Bootloader loading method according to any one of claims 1 to 6.
